# EUROPÄISCHE PATENTANMELDUNG

(11) **EP 0 628 578 A2**
(43) Veröffentlichungstag der Anmeldung: **14.12.1994**
(21) Anmeldenummer: 94108428.7
(22) Anmeldetag: 01.06.1994
(51) Int. Cl.: C08F 212/08, C08F 214/06, C08F 222/40

(54) **2,6-Dimethylphenylphenymaleinimid als Comonomeres für Styrolcopolymerisate und Vinylchloridcopolymerisate**

(30) Priorität: 11.06.1993 AT 1131/93
(71) Anmelder: DSM Chemie Linz GmbH, 4021 Linz (AT)
(72) Erfinder: Steinbauer, Gerhard, Dr., A-4470 Enns (AT); Bartus, Jan, Dr., Brooklyn, NY 11219 (US); Horacek, Heinrich, Dr., A-4048 Puchenau (US); Vogl, Otto, Dr., New Rochelle, NY 10804 (US); Stern, Gerhard, Dr., A-4180 Sonnberg (AT)
(74) Vertreter: Kunz, Ekkehard, Dr.

(57) **Zusammenfassung**

Verwendung von 2,6-Dimethylphenylmaleinimid als Comonomeres zur Herstellung von Styrolcopolymerisaten und Vinylchloridcopolymerisaten mit gegenüber dem Stand der Technik erhöhter Glastemperatur und geringer Eigenfärbung.

## Beschreibung

Die Erfindung betrifft die Verwendung von 2,6-Dimethylphenylmaleinimid als Comonomeres für Styrolcopolymerisate und Vinylchloridcopolymerisate, solche Polymerisate und deren Verwendung.

Styrol- und Vinylchloridpolymerisate sind bedeutende Vertreter innerhalb der Kunststoffpalette und werden bereits in weiten Bereichen, etwa in der Kraftfahrzeugindustrie, für Haushaltsgeräte, Behälter, Bodenbeläge und vieles mehr, eingesetzt. Herkömmliche Styrol-bzw. Vinylchloridpolymerisate haben jedoch beispielsweise gegenüber Metallen als Werkstoff den Nachteil der niedrigeren Wärmeformbeständigkeit, wodurch ihre Anwendungsmöglichkeiten eingeschränkt werden. Aus diesem Grund wurden Versuche unternommen, die Wärmeformbeständigkeit von Styrol- und Vinylchloridpolymerisaten zu verbessern.
So wurden bereits eine Reihe von Maleinimiden, wie etwa Phenylmaleinimid oder Bismaleinimide, mit Styrol (DE-OS 28 49 242) oder mit Vinylchlorid copolymerisiert, wodurch die Glastemperaturen der Polymerisate gegenüber Styrol- und Vinylchloridcopolymerisaten ohne Maleinimid etwas erhöht werden konnten. Mit Bismaleinimiden wurden dabei die besseren Ergebnisse erzielt.
Die Verwendung von 2,6-Dimethylphenylmaleinimid als Comonomeres zur Herstellung von transparenten, farblosen Polymethacrylaten ist in Chemical Abstracts, Vol. 111: 155054 e beschrieben.

Aufgabe der vorliegenden Erfindung war es Sryrolcopolymerisate und Vinylchloridcopolymerisate herzustellen, die eine deutlich verbesserte Temperaturbeständigkeit und geringe Eigenfärbung aufweisen. Diese Aufgabe konnte unerwarteterweise durch Copolymerisation mit 2,6-Dimethylphenylmaleinimid gelöst werden.

Gegenstand der Erfindung ist demnach die Verwendung von 2,6-Dimethylphenylmaleinimid als Comonomeres zur Herstellung von Styrolcopolymerisaten und Vinylchloridcopolymerisaten mit erhöhter Glastemperatur und geringer Eigenfärbung.

Styrolcopolymerisate sind dabei Polymerisate, die neben Styrol und 2,6-Dimethylphenylmaleinimid mindestens 1, vorzugsweise 2 weitere Monomere enthalten. Diese Monomere werden vorzugsweise aus den Gruppen der Diene und Acrylate ausgewählt. Die Gruppe der Diene umfaßt beispielsweise Butadien, Isopren, Chloropren, Neopren oder 2,3-Dimethyl-1,3-butadien, vorzugsweise wird Butadien ausgewählt. Acrylate sind beispielsweise Acrylnitril, Acrylsäure und Acrylsäureester mit 1 - 12 C-Atomen im Esterteil. Bevorzugt wird Acrylnitril verwendet. Neben Styrol kommen dabei auch Styrolderivate wie alpha-Methylstyrol, Vinyltoluole, wie 2-Methylstyrol, 3-Methylstyrol, 4-Methylstyrol oder Chlor-styrole wie 2-Chlorstyrol, 3-Chlorstyrol, 2,4-Dichlorstyrol, 2,5-Dichlor-, und 2,6-Dichlorstyrol, zu verstehen. Bevorzugte Styrolcopolymerisate sind Styrol-Butadien-Polymere (SBR), Styrol-Acrylnitril-Polymere (SAN) und Acrylnitril-Butadien-Styrol-Polymere (ABS).
Vinylchloridcopolymerisate (PVC) enthalten hingegen nur Vinylchlorid und 2,6-Dimethylphenylmaleinimid.
Die jeweiligen Monomere der Styrolcopolymerisate (SP) und PVC werden erfindungsgemäß mit 2,6-Dimethylphenylmaleinimid (DMPMI) copolymerisiert, wobei 1 - 75 Gew.%, vorzugsweise 5 - 50 Gew. % DMPMI zugesetzt werden.
Weiters können noch übliche Additive wie etwa UV-Stabilisatoren, Oxidationsverzögerer, Antistatika, Füllstoffe, Farbpigmente und Verstärkungsfasern, zugegeben werden.

Ein weiterer Gegenstand der Erfindung sind die mit 2,6-Dimethylphenylmaleinimid modifizierten Styrolcopolymerisate und Vinylchloridpolymerisate, sowie deren Herstellung. Polymerisationstechniken zur Herstellung der mit DMPMI modifizierten Polymerisate sind die Massen-, Emulsions-, Lösungs-, Fällungs-, Suspensions- und Latex-Suspensionspolymerisation.

Bevorzugt werden die Emulsions-, die Suspensions- und die Latex-Suspensionspolymerisationstechnik angewandt.

Die Polymerisation erfolgt vorzugsweise in Gegenwart eines oder mehrerer üblicher Polymerisationsinitiatoren.
Übliche Polymerisationsinitiatoren sind beispielsweise Peroxyde, wie Benzoylperoxid, Dicumylperoxyd, Di-tert.-Butylperoxid oder Azoverbindungen, wie Azodiisobutyronitril oder Persulfate, wie Kalium- oder Ammoniumpersulfat.
Der Initiatior wird dabei in katalytischen Mengen von 0,1 - 1 Mol% zugegeben.

Die Polymerisation kann eventuell auch thermisch in Gang gesetzt werden.

Die Reaktionstemperatur variiert je nach Ausgangsverbindungen und Polymerisationstechnik und beträgt etwa 20 - 200°C.
Die Polymerisation kann gegebenenfalls auch unter Inertgasatmosphäre, etwa unter Stickstoffatmosphäre durchgeführt werden.

Erfolgt die Polymerisation in Lösung, so werden beispielsweise Dioxan, Dimethylformamid, Dimethylacetamid, N-Methylpyrrolidon, Tetrahydrofuran, Ethylbenzol, Xylol oder Toluol als Lösungsmittel verwendet.

Die Polymerisationsreaktion kann jedoch auch in Abwesenheit eines zusätzlichen Lösungsmittels durchgeführt werden; ein Monomer, zum Beispiel Styrol, dient dann als Lösungsmittel für DMPMI.

Bei der Suspensions- oder Emulsionspolymerisation wird im allgemeinen in wäßrigem Medium gearbeitet.
Es werden dabei üblicherweise die Monomere in Gegenwart eines grenzflächenaktiven Mittels emulgiert. Geeignete Mittel sind beispielsweise Natriumstearat, Kaliumlaurylsulfat, Natriumdodecylsulfat, Natriumoleat, Natrium- und Kaliumalkylnaphthalinsulfonate, Pyridinderivate oder quaternäre Ammoniumsalze.

Bei einer bevorzugten Herstellungsweise von modifizierten ABS-Polymerisaten durch Emulsionspolymerisation wird zuerst ein Butadien-Copolymerisat-Latex hergestellt bzw. vorgelegt und anschließend eine Pfropfreaktion durch Polymerisation mit einer Styrol-Acrylnitril-DMPMI-Monomeren Mischung durchgeführt. Um aus dem Polymerisat-Latex ABS-Pulver zu erhalten, können Säuren, etwa HCl, Essigsäure, Schwefelsäure und/oder Elektrolyten, etwa LiCl, MgSO₄, CaCl₂ in geringen Mengen zur Unterstützung der Fällung zugegeben werden.
Als Fällungsmittel eignen sich dazu beispielsweise Alkohole, wie Methanol, Ethanol oder Propanol oder Kohlenwasserstoffe, wie Hexan.

Bei einer bevorzugten Variante der Massenpolymerisation, etwa zur Herstellung von modifizierten ABS-Polymerisaten, wird zuerst ein geeignetes Kautschuksubstrat in der Monomerenmischung gelöst und anschließend polymerisiert. Geeignete Kautschuksubstrate sind beispielsweise SAN, Acrylnitrilkautschuk (ANR) oder SBR, sowie Silikonkautschuk, Polyurethankautschuk, Brombutylkautschuk, Ethylenpropylenkautschuk, Epichlorhydrinkautschuk, Polysulfidkautschuk, Chlorsulfonpolyethylen, Ethylen-Vinylacetat-Kautschuk, Fluorkautschuk, Polynorbornen-Kautschuk, Polyphosphazenkautschuk

Die erfindungsgemäß hergestellten modifizierten Styrolcopolymerisate und Vinylchloridcopolymerisate fallen primär als Pulver an und können anschließend zu Granulat verarbeitet werden. Sie zeichnen sich dabei durch eine gegenüber dem Stand der Technik erhöhte Glastemperatur und somit einer erhöhten Wärmeformbeständigkeit und einer geringen Eigenfärbung, die durch einen kleinen Yellownessindex ausgedrückt wird, aus.
Aus diesem Grund werden sie zur Herstellung von technischen Kunststoffteilen verwendet. Technische Kunststoffteile werden beispielsweise bei elektrische Haushaltsgeräten, z. B. zum Schutz von Elektromotoren oder für Wärmeisolierungen und Armaturteile und ähnlichem verwendet.

### Beispiel 1 - 7:

Für die Versuche wurde ein ANR-Latex (Hycar/562, BF Goodrich) verwendet, der aus 67 % Butadien und 33 % Acrylnitril (AN) besteht, wobei der Feststoffanteil in Wasser 41 % beträgt.
Es wurden 18,1 g ANR-Latex, 10 g Styrol (ST) und 7,5 g AN eingesetzt. In den Versuchen 2 - 7 wurden äquimolare Mengen von AN und ST durch 5,10 oder 20 mol % DMPMI oder Phenylmaleinimid (PMI), das als Vergleichssubstanz diente, ersetzt.
Dazu wurde DMPMI bzw. PMI zuerst in AN, ST und ANR während 15 - 30 Minuten bei 60°C gelöst, Natriumdodecylsulfat (0,2 % in 130 ml H₂O) als Emulgator zugegeben und nach dem vollständigen Lösen der Monomere 4,4'-Azobis (4-cyanovaleriansäure) (0,5 mol% bezogen auf die Monomermenge) als Initiator zugegeben.
Die Polymerisation begann bei 60°C. Während 3 Stunden wurde die Temperatur langsam auf 75 °C erhöht und weitere 3 Stunden gehalten.
Anschließend wurde die Emulsion in 500 ml Methanol gefällt, wobei 3 ml 10 % LiCl-Lösung und 1,5 ml konzentrierter Salzsäure zugegeben wurden, um einen kompakteren Niederschlag zu erzielen.
Nach dem Abfiltrieren wurde das Polymer zuerst mit destilliertem Wasser und anschießend mit Methanol gewaschen und getrocknet.

Die Ergebnisse sind in Tabelle 1 zusammengefaßt.

### Beispiel 8 - 14:

Für die Versuche wurde ein SBR-Latex (Good-Rite 2570 x 59, BF Goodrich) verwendet, der aus 51 % Butadien, 46 % Styrol und 3 % Acrylsäureester besteht, wobei der Feststoffanteil in Wasser 52 % beträgt.
Es wurden 18,9 g SBR-Latex, 5,5 g ST und 10 g AN eingesetzt.

In den Versuchen 9 - 14 wurden äquimolare Mengen AN und ST durch 5, 10 oder 20 und % DMPMI oder PMI, das wiederum als Vergleichssubstanz diente, ersetzt.

Die Durchführung der Polymerisation erfolgte analog den Beispielen 1 - 7, die Ergebnisse sind in Tabelle 2 dargestellt.

### Beispiel 15 - 17:

In einer wäßrigen Dispersion aus 120 g Wasser mit 0,1 g Hydroxyethylcellulose als Dispergator wurde in Gegenwart von 0,05 g Azodiisobutyronitril als Initiator, 8 g DMPMI (8 Gew.%) bzw. 8 g PMI (8 Gew.%) mit 92 g Vinylchlorid (VCM) bei 64 °C copolymerisiert. Der dabei entstandene Niederschlag wurde abfiltriert, gewaschen und anschließend getrocknet. Zum Vergleich wurde VCM ohne zusätzliches Monomeres polymerisiert.

Die nach den Beispielen 1 - 17 hergestellten Proben wurden zu Plättchen verpreßt und hinsichtlich ihrer Glastemperatur (Tg) im Differential-Scanning Calorimeter und hinsichtlich ihrer Eigenfärbung mittels des Yellownessindexes ( Y) untersucht, die Ergebnisse werden in Tabelle 3 dargestellt.

**Tabelle 1**

| Bsp. | ST g | AN g | PMI g | PMI mol% | DMP MI g | DMP MI mol% | Polymer g | Polymer conv. % |
|---|---|---|---|---|---|---|---|---|
| 1 | 10.5 | 7.5 | - | - | - | - | 22,3 | 84 |
| 2 | 9.7 | 7.3 | 2.0 | 5 | - | - | 23.7 | 85 |
| 3 | 9.5 | 7.1 | 4.1 | 10 | - | - | 25.8 | 89 |
| 4 | 9.0 | 6.8 | 8.2 | 20 | - | - | 28.3 | 87 |
| 5 | 9.7 | 7.3 | - | - | 2.4 | 5 | 24.3 | 86 |
| 6 | 9.5 | 7.1 | - | - | 4.8 | 10 | 25.9 | 86 |
| 7 | 9.0 | 6.8 | - | - | 9.6 | 20 | 28.1 | 81 |
| conv. % = Prozentsatz der Umwandlung | | | | | | | | |

**Tabelle 2**

| Bsp. | ST g | AN g | PMI g | PMI mol% | DMP MI g | DMP MI mol% | Polymer g | Polymer conv. % |
|---|---|---|---|---|---|---|---|---|
| 8 | 5.5 | 10.0 | - | - | - | - | 23.1 | 86 |
| 9 | 5.3 | 9.7 | 2.1 | 5 | - | - | 24.7 | 87 |
| 10 | 5.2 | 9.5 | 4.2 | 10 | - | - | 24.4 | 77 |
| 11 | 4.9 | 9.5 | 8.4 | 20 | - | - | 29.3 | 87 |
| 12 | 5.3 | 9.7 | - | - | 2.4 | 5 | 24.3 | 83 |
| 13 | 5.2 | 9.5 | - | - | 4.8 | 10 | 25.9 | 86 |
| 14 | 4.9 | 9.0 | - | - | 9.6 | 20 | 29.5 | 83 |
| conv. % = Prozentsatz der Umwandlung | | | | | | | | |

**Tabelle 3**

| Beispiel | PMI/DMPMI | Latex/Monomer | Tg(°C) | Y |
|---|---|---|---|---|
| 1 | - | ANR/ST,AN | 110 | 2 |
| 2 | PMI | ANR/ST,AN | 112 | 5 |
| 3 | PMI | ANR/ST,AN | 113 | 10 |
| 4 | PMI | ANR/ST,AN | 115 | 20 |
| 5 | DMPMI | ANR/ST,AN | 115 | 3 |
| 6 | DMPMI | ANR/ST,AN | 140 | 4 |
| 7 | DMPMI | ANR/ST,AN | 165 | 5 |
| 8 | - | SBR/ST,AN | 110 | 6 |
| 9 | PMI | SBR/ST,AN | 115 | 9 |
| 10 | PMI | SBR/ST,AN | 120 | 12 |
| 11 | PMI | SBR/ST,AN | 130 | 25 |
| 12 | DMPMI | SBR/ST,AN | 140 | 5 |
| 13 | DMPMI | SBR/ST,AN | 160 | 7 |
| 14 | DMPMI | SBR/ST,AN | 225 | 9 |
| 15 | - | -/VCM | 70 | 0 |
| 16 | DMPMI | -/VCM | 89 | 1 |
| 17 | PMI | -/VCM | 82 | 4 |

## Patentansprüche

1. Verwendung von 2,6-Dimethylphenylmaleinimid als Comonomeres zur Herstellung von Styrolcopolymerisaten und Vinylchloridcopolymerisaten mit erhöhter Glastemperatur und geringer Eigenfärbung.

2. Styrolcopolymerisate und Vinylchloridcopolymerisate, dadurch gekennzeichnet, daß sie 1 - 70 Gew.% an 2,6-Dimethylphenylmaleinimid enthalten.

3. Styrolcopolymerisate und Vinylchloridcopolymerisate nach Anspruch 2, dadurch gekennzeichnet, daß sie 5 - 50 Gew. % an 2,6-Dimethylphenylmaleinimid enthalten.

4. Styrolcopolymerisate nach Anspruch 2, dadurch gekennzeichnet, daß sie neben 2,6-Dimethylphenylmaleinimid und Styrol mindestens 1, vorzugsweise 2 weitere copolymerisierbare Monomere aus den Gruppen der Diene und Acrylate aufweisen.

5. Styrolcopolymerisate nach Anspruch 2, dadurch gekennzeichnet, daß sie aus 2,6-Dimethylphenylmaleinimid, Styrol, Acrylnitril und Butadien bestehen.

6. Styrolcopolymerisate und Vinylchloridcopolymerisate nach Anspruch 2, dadurch gekennzeichnet, daß sie bei einer Yellownessindexänderung von maximal 5, eine um mindestens 10°C höhere Glastemperatur aufweisen.

7. Verfahren zur Herstellung von Styrolcopolymerisaten und Vinylchloridcopolymerisaten, dadurch gekennzeichnet, daß die einzelnen Monomere mit 2,6-Dimethylphenylmaleinimid copolymerisiert werden.

8. Verwendung von 2,6-Dimethylphenylmaleinimid enthaltenden Styrolcopolymerisaten und Vinylchloridcopolymerisaten nach Anspruch 2, zur Herstellung von technischen Kunststoffteilen.
